# FASCICULE DE BREVET EUROPEEN

(11) **EP 0 500 424 B1**
(45) Date de publication et mention de la délivrance du brevet: **07.07.1999**
(21) Numéro de dépôt: 92400380.9
(22) Date de dépôt: 13.02.1992
(51) Int. Cl.: C04B 41/89

(54) **Procédé pour la protection anti-oxydation d'un matériau qui, au moins en surface, est constitué d'une céramique formée par un composé du silicium, et matériau tel qu'obtenu par le procédé**
Verfahren zum Schützen eines Materials gegen Oxydation, wobei wenigstens seine Oberfläche aus Silicium-Keramik besteht, sowie hergestelltes Material
Method for protecting against oxidation a ceramic material, at least its surface being composed of a silicon containing ceramic, and material so obtained

(30) Priorité: 21.02.1991 FR 9102104
(43) Date de publication de la demande: 26.08.1992
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Lacoste, Marc, Résidence St Brice, F-33140 Villenave d'Ornon (FR); Laxague, Michel, F-33200 Bordeaux Cauderan (FR); Thebault, Jacques, F-33200 Bordeaux (FR)
(74) Mandataire: Joly, Jean-Jacques

(56) Documents cités:
- EP-A- 0 133 315
- EP-A- 0 134 770
- EP-A- 0 359 614
- DE-C- 967 846

## Description

La présente invention concerne la protection anti-oxydation d'un matériau qui, au moins en surface, est constitué d'une céramique formée par un composé du silicium.

Un domaine plus particulièrement visé par l'invention est celui des matériaux composites contenant une phase oxydable, notamment les matériaux thermostructuraux.

Les matériaux composites thermostructuraux sont caractérisés par leurs bonnes propriétés mécaniques et leur capacité à conserver ces propriétés jusqu'à des températures élevées. Ils sont constitués d'un renfort en fibres réfractaires densifié par une matrice également réfractaire. Les matériaux réfractaires constitutifs des fibres et de la matrice sont le carbone (C) ou une céramique, par exemple le carbure de silicium (SiC), ce qui donne des materiaux de type C/C, C/SiC (renfort en fibres de carbone et matrice SiC), SiC/SiC, ou encore C/C-SiC (matrice à deux phases : carbone et SiC). Le comportement mécanique peut être amélioré en formant entre les fibres et la matrice une couche intermédiaire, ou interphase, en pyrocarbone ou en nitrure de bore.

Ainsi, les matériaux composites thermostructuraux comprennent pratiquement dans tous les cas une phase oxydable en carbone ou nitrure de bore, au niveau du renfort fibreux, de la matrice ou d'une interphase entre fibres et matrice.

Il est impératif de munir ces matériaux d'une protection anti-oxydation afin d'éviter leur rapide dégradation en atmosphère oxydante à température élevée.

Le carbure de silicium (SiC) est largement utilisé pour constituer un revêtement de protection anti-oxydation. Le revêtement SiC peut être formé par différents procédés : infiltration ou dépôt chimique en phase vapeur, pack-cémentation, siliciuration du matériau composite. Dans le cas d'un matériau composite à matrice SiC, le revêtement SiC est constitué par la couche externe de la matrice.

Généralement, l'action protectrice du revêtement SiC est complétée par un revêtement de surface externe. Celui-ci est avantageusement constitué par un verre à base de silice (SiO₂) formant barrière de diffusion de l'oxygène et ayant des propriétés cicatrisantes, la phase vitreuse présentant, aux températures élevées rencontrées en service par le matériau, une viscosité lui permettant de colmater des fissures apparaissant dans le revêtement SiC. La phase vitreuse apporte ainsi une tolérance à la fissuration du matériau à protéger. En outre, la viscosité de la phase vitreuse peut être contrôlée par l'ajout de différents éléments, en particulier pour adapter cette viscosité aux températures auxquelles le matériau est exposé lors de son utilisation. On notera que, même en l'absence du dépôt d'une phase vitreuse externe, l'oxydation passive du SiC conduit à la formation d'une couche externe d'oxyde protecteur SiO₂.

La protection anti-oxydation procurée par un revêtement SiC éventuellement complété par une phase vitreuse à base de SiO₂ donne satisfaction lorsque les conditions rencontrées sont celles de l'oxydation passive de SiC.

Il n'en est plus de même dans les conditions d'oxydation active du SiC, c'est-à-dire les conditions de température et de pression dans lesquelles l'oxydation conduit à la formation d'espèce volatile (SiO) annihilant l'effet protecteur. En effet, dans ces conditions, le revêtement SiC se dégrade, laissant rapidement libre accès à la phase oxydable du matériau composite pour les espèces oxydantes.

La formation de gaz SiO peut résulter de la réaction entre SiC et une espèce oxydante du milieu environnant, tel que l'oxygène ou l'eau, ou de la réaction entre SiC et une phase SiO₂.

La transition entre le domaine d'oxydation passive du SiC et le domaine d'oxydation active se produit à une température de plus en plus basse lorsque la pression diminue. Ainsi, l'oxydation active du SiC peut se produire dans certaines conditions d'utilisation de matériaux composites thermostructuraux, par exemple pour des éléments de protection thermique d'avion spatial subissant un échauffement important dès la rentrée dans les couches les plus élevées de l'atmosphère.

Plusieurs solutions pour résoudre le problème posé par l'oxydation active du SiC à haute température ont été proposées. On pourra se référer en particulier aux documents EP-0 310 043 et FR-A-2 635 773, ainsi qu'à la publication de J.E. Sheehan intitulée "Ceramic Coatings for Carbon Material" parue dans "Proceedings on Material Technology" May 1987.

Toutefois, la présence d'une couche externe vitreuse à base de SiO₂ n'est pas divulguée dans ces documents, voire même est déconseillée.

Ce qui a été exposé ci-avant à propos du SiC vaut également pour d'autre matériaux céramiques formés par un compose du silicium, en particulier le nitrure de silicium (Si₃N₄). En effet, Si₃N₄ a des propriétés semblables à celles de SiC et est connu en tant que matériau pouvant constituer une matrice dans un matériau composite à matrice céramique ou matériau pouvant constituer un revêtement de protection anti-oxydation. Dans des conditions d'oxydation passive, il se forme une couche de SiO₂ sur un revêtement de Si₃N₄, tandis que, dans des conditions d'oxydation active, Si₃N₄ réagit comme SiC.

La présente invention a pour but de réaliser une protection anti-oxydation d'un matériau dont au moins la surface est constituée d'une céramique formée par un composé du silicium, protection qui comporte une phase vitreuse externe à base de SiO₂, et qui soit efficace tant dans le domaine d'oxydation active du composé du silicium, que dans la domaine d'oxydation passive.

Ce but est atteint grâce à un procédé selon lequel une couche intermédiaire ne contenant pas l'élément silicium est formee entre la surface du composé du silicium et la couche externe à base de silice, la couche intermédiaire étant en alumine ou en un précurseur de l'alumine.

Par précurseur de l'alumine, on entend ici un composé de l'aluminium générant de l'alumine par oxydation, par exemple du nitrure d'aluminium AlN.

La couche intermédiaire évite tout contact, et donc toute possibilité de réaction, entre la céramique formée par le composé du silicium et la couche externe à base de SiO₂, tout en étant compatible avec le composé du silicium et le SiO₂. Ainsi, tous les avantages apportés par la présence de la phase vitreuse à base de SiO₂ peuvent être conservés dans le domaine d'oxydation active, en plus de son efficacité connue dans le domaine d'oxydation passive.

Si une fissure atteint le composé du silicium depuis la surface extérieure du matériau, le composé du silicium peut être oxydé, entraînant la formation de SiO, si les conditions sont celles de l'oxydation active, ou de SiO₂, si les conditions sont celles de l'oxydation passive. Dans les deux cas, l'oxyde formé se combine à l'alumine pour donner de la mullite. Il y a accroissement du volume dû au réarrangement cristallin, et ainsi fermeture de la fissure. Plus particulièrement dans le cas où du SiO₂ est formé par oxydation du composé du silicium, le fait qu'il se combine à l'alumine, en engendrant une phase mullite lui fait perdre toute réactivité vis-à-vis du composé du silicium. Ainsi, l'alumine de la couche intermédiaire a non seulement comme fonction de constituer une barrière de réaction entre la céramique formée par le composé du silicium et la couche externe à base de SiO₂, mais aussi de piéger le SiO₂ formé par oxydation du composé du silicium.

Une phase mullite peut également être engendrée par interaction entre la couche externe à base de SiO₂ et l'alumine de la couche intermédiaire.

Selon un autre de ses aspects, l'invention vise aussi un matériau muni d'une protection anti-oxydation obtenue par le procédé défini plus haut, en particulier un matériau composite thermostructural.

L'invention sera mieux comprise à la lecture de la description détaillée faite, ci-après, à titre indicatif, mais non limitatif. Sur les dessins :
- la figure 1 est un diagramme illustrant la transition entre les domaines d'oxydation passive et d'oxydation active du SiC ;
- la figure 2 est une microphotographie montrant, en coupe, et après traitement d'oxydation, la partie superficielle d'un échantillon de matériau composite de type C/SiC muni partiellement d'une protection anti-oxydation selon l'art antérieur et partiellement d'une protection anti-oxydation selon l'invention ;
- les figures 3A à 3C illustrent très schématiquement le mécanisme de protection dans le cas d'une fissuration à la surface d'un matériau muni d'une protection anti-oxydation conforme à l'invention ; et
- les figures 4 à 7 illustrent très schématiquement différents systèmes de protection anti-oxydation obtenus conformément à l'invention.

Le domaine d'application de l'invention est celui de la protection anti-oxydation des matériaux dont au moins la surface est constituée par une céramique formée par un composé du silicium.

On envisage ci-après le cas d'un matériau composite thermostructural de type C/SiC à renfort en fibres de carbone et matrice SiC. Dans ce cas, la surface SiC est constituée par la phase externe de la matrice SiC.

Plusieurs échantillons de matériau C/SiC sont réalisés de la façon suivante :
- un substrat fibreux en carbone est réalisé par empilement à plat de strates formées d'un tissu de carbone, pour obtenir une préforme ayant un taux volumique de fibres égal à 40 % (pourcentage du volume apparent de la préforme effectivement occupé par les fibres),
- un revêtement intermédiaire en pyrocarbone est formé sur les fibres par infiltration chimique en phase vapeur, l'épaisseur du revêtement intermédiaire étant environ égale à 1 micron, et
- du SiC est infiltré au sein de la préforme par infiltration chimique en phase vapeur jusqu'à atteindre une porosité résiduelle de 9 % ; au cours de cette opération, du SiC est également déposé à la surface de l'échantillon.

Un procédé de ce type est décrit notamment dans le document EP-A-O 172 082.

En atmosphère oxydante, il se forme un revêtement protecteur SiO₂ par oxydation du SiC en surface, la combinaison du SiC et de SiO₂ remplissant une fonction de protection anti-oxydation dans les conditions d'oxydation passive du SiC.

Des échantillons du matériau C/SiC sont soumis à oxydation sous air à des températures et sous des pressions différentes afin de déterminer la transition entre le domaine d'oxydation passive du SiC et le domaine d'oxydation active, ce dernier étant atteint dès lors qu'une perte de poids du matériau par formation de gaz SiO est détectée.

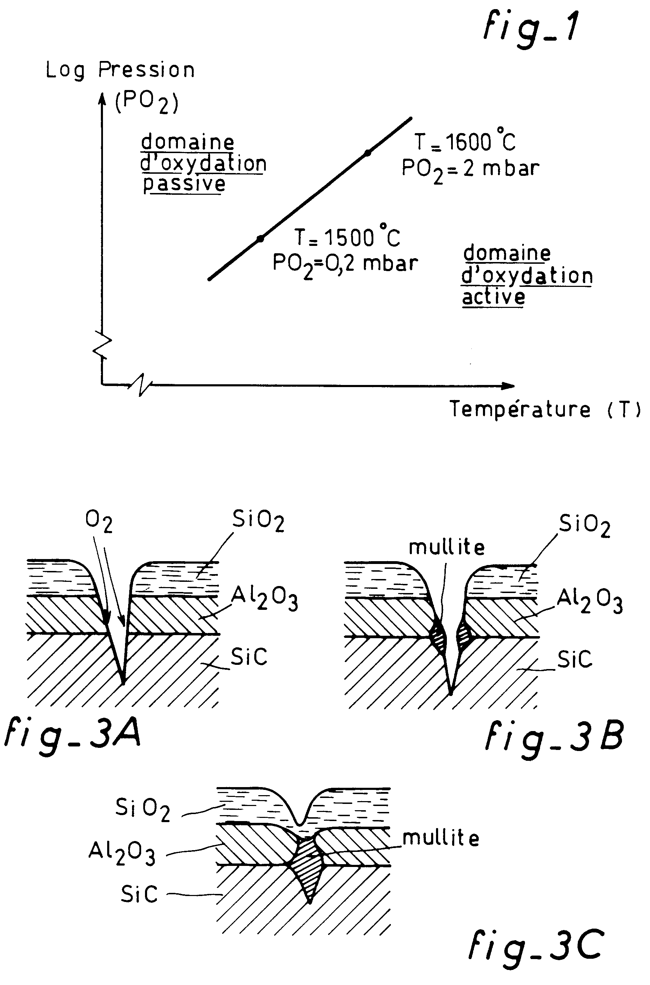

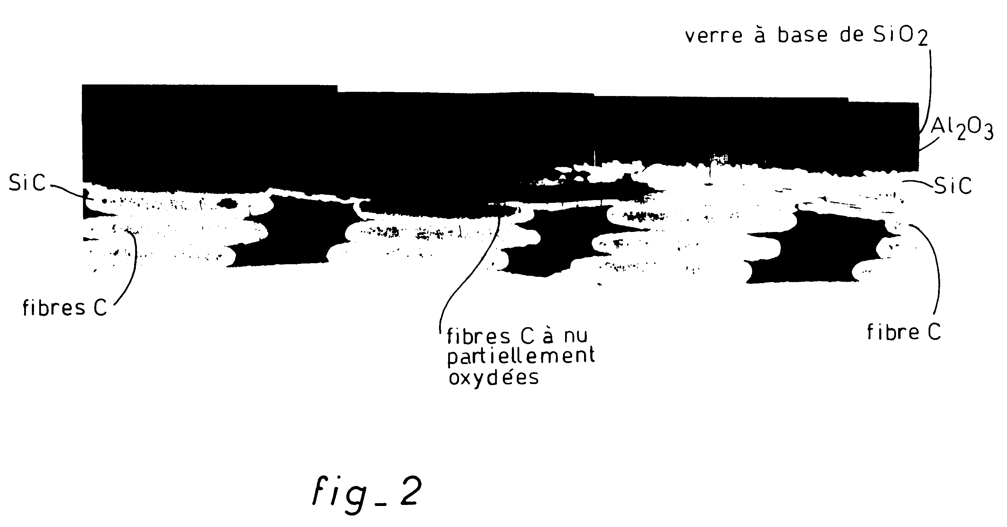

Cette transition est montrée sur le diagramme de la figure 1 dans lequel la température est donnée en abscisse et le logarithme de la pression partielle d'oxygène en ordonnée. Le passage du domaine d'oxydation passive au domaine d'oxydation active a été détecté à environ 1600°C pour une pression partielle d'oxygène abaissée à environ 2 mbar (200 Pa) et à environ 1500°C pour une pression partielle d'oxygène abaissée à environ 0,2 mbar (20 Pa). On notera que, d'une façon générale, les conditions de la transition entre le domaine d'oxydation passive et le domaine d'oxydation active sont relativement imprécises, comme cela ressort en particulier de l'article de Wallace L. Vaugh paru dans la publication "Journal American Ceramic Society", 73 (6), p. 1540-1543 (1990) intitulé "Active to passive transition in the oxydation of silicon carbide and silicon nitride in air".

### Exemple

Selon un exemple de mise en oeuvre de l'invention, des échantillons de matériau C/SiC obtenus comme indiqué plus haut sont munis d'une couche d'alumine (Al₂O₃) et d'une couche externe vitreuse à base de silice (SiO₂).

La couche intermédiaire de Al₂O₃ est formée par dépôt par pulvérisation au plasma. Son épaisseur est environ égale à 100 microns.

La couche externe à base de SiO₂ est déposée par pistolettage ou au pinceau, un traitement thermique étant ensuite effectué pour engendrer une phase vitreuse. L'épaisseur de la couche vitreuse à base de SiO₂ est environ égale à 50 microns.

D'autres techniques connues peuvent être utilisées pour former la couche de Al₂O₃, par exemple un dépôt chimique en phase vapeur, ou pour former la couche vitreuse à base de SiO₂, par exemple un procédé sol-gel ou tout autre procédé donnant un verre en couche mince.

Des échantillons de matériau C/SiC ainsi munis d'une couche intermédiaire de Al₂O₃ et d'une couche externe vitreuse à base de SiO₂ ont été respectivement soumis aux traitements suivants :
(1) traitement d'oxydation sous air à 1600°C sous une pression de 1 mbar (0,1KPa) correspondant à une pression partielle d'oxygène de 0,2 mbar, pendant 9 fois 20 mn (avec retour à température ambiante entre deux échauffements), conduisant à une perte de masse de 1,6 %,
(2) traitement d'oxydation sous oxygène atomique à 1870°C sous une pression totale d'air de 45 mbar (4,5 KPa soit une pression partielle d'oxygène de 9 mbar c'est à dire 0,9 KPa) pendant 5 mn conduisant à une perte de masse de 0,15 %,
(3) traitement d'oxydation sous air à 1500°C sous une pression de 1 bar (10² KPa) d'air pendant 9 heures fractionnées en 6 fois 90 mn (avec retour à température ambiante entre deux échauffements) conduisant à une perte de masse de 0,75 %,

Dans tous les cas, aucune oxydation active du SiC n'a été observée.

### Essai Comparatif n° 1

A titre comparatif, des échantillons C/SiC non revêtus des couches Al₂O₃ et SiO₂ ont été soumis aux traitements d'oxydation (1), (2) et (3) ci-dessus. Après traitement (1), l'attaque du SiC a pu être observée, avec mise à nu des fibres de carbone, conduisant à une destruction rapide du matériau. La perte de masse après seulement 7 fois 20 mn de traitement est de 18 %.

Après traitement (2), l'attaque du SiC est observée comme dans l'exemple précédent, avec mise à nu des fibres de carbone, conduisant à une rapide destruction du matériau. La perte de masse est de 2,5 %.

Ces deux exemples montrent l'efficacité du revêtement objet de l'invention pour la protection contre l'oxydation dans des conditions d'oxydation active du SiC.

Après traitement (3), aucune oxydation active n'est observée montrant que l'on se situe bien dans le domaine d'oxydation passive du SiC. La perte de masse est de 17 % et confirme l'efficacité du revêtement conforme à l'invention pour la protection contre l'oxydation dans les conditions d'oxydation passive du SiC.

### Essai Comparatif n° 2

Un échantillon C/SiC revêtu d'une couche de verre à base de SiO₂, comme dans l'art antérieur, est soumis au traitement d'oxydation (2) ci-dessus. Après traitement, l'attaque du SiC a pu être observée, avec mise à nu des fibres de carbone, conduisant à une destruction rapide du matériau. La perte de masse est de 4,7 % et montre l'inefficacité de ce type de protection dans les conditions d'oxydation active du SiC.

### Essai Comparatif n° 3

Un échantillon C/SiC est revêtu partiellement d'une couche de Al₂O₃ d'épaisseur égale à environ 100 microns, obtenue par pulvérisation au plasma, une partie de la surface de l'échantillon étant masquée. Après retrait du masque, une couche externe vitreuse d'épaisseur égale à environ 50 microns est formée par pistolettage et traitement thermique.

L'échantillon ainsi revêtu est soumis au traitement d'oxydation (1) ci-dessus. La figure 2 est une microphotographie montrant, en coupe, la partie superficielle de l'échantillon.

Dans la partie droite de la figure 2, qui correspond à la partie de l'échantillon où la couche intermédiaire de Al₂O₃ a été formée, on voit que le revêtement SiC constitué par la phase externe de la matrice n'est pas attaqué et reste protégé par la couche de Al₂O₃ et la couche de verre à base de SiO₂.

Par contre, dans la partie gauche de la figure 2, qui correspond à la partie de l'échantillon où la couche intermédiaire de Al₂O₃ n'a pas été formée, on voit que le revêtement SiC constitué par la phase externe de la matrice a disparu, ainsi que la couche de verre à base de SiO₂, provoquant la mise à nu et l'attaque des fibres C.

La figure 2 illustre donc de façon spectaculaire, dans des conditions d'oxydation active, l'efficacité de la protection réalisée conformément à l'invention.

On notera que, avec le procédé selon l'invention, la protection anti-oxydation est effective en dépit de la fissuration superficielle du revêtement, une telle fissuration se produisant nécessairement au moins dans les cas d'échauffements cycliquestraitement (1) ci-dessus.

Ceci peut être expliqué de la façon suivante :

Lorsqu'une fissure se produit à la surface du matériau jusqu'à atteindre la couche de SiC (figure 3A), le SiO₂ de la couche externe, par sa viscosité, et/ou des espèces oxydantes du milieu environnant viennent au contact du SiC. Dans ce dernier cas, selon que l'on se trouve dans le domaine d'oxydation passive ou dans celui d'oxydation active, il y a formation de SiO₂ ou de SiO.

Dans tous les cas, l'alumine est en fort excés par rapport au SiO₂ ou SiO et il y a formation de mullite proportionnellement à la quantité de SiO₂ ou SiO présente (figure 3B).

Il y a alors accroissement de volume dû au réarrangement cristallin et ainsi fermeture de la fissure (figure 3C), tandis que SiO₂ se trouvant combiné à l'alumine perd toute réactivité vis-à-vis de SiC. La réaction entre SiO₂ externe et SiC est ainsi empêchée par la présence de la mullite.

Dans ce qui précède, il a été envisagé la formation d'une couche intermédiaire d'alumine entre le SiC et la couche externe à base de SiO₂.

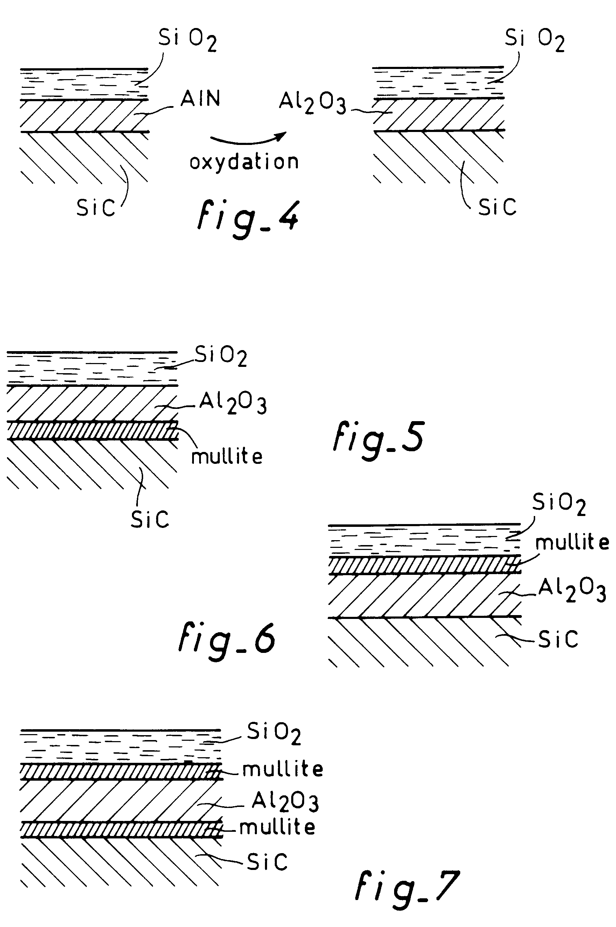

En variante, comme illustré par la figure 4, la couche intermédiaire peut être constituée de tout composé de l'aluminium ou mélange précurseur de l'alumine. Un tel précurseur peut être notamment le nitrure, l'oxynitrure ou le carbure d'aluminium (AlN, AlON, Al₄C₃) donnant de l'alumine par oxydation. A titre d'exemple, la couche intermédiaire est formée à partir de nitrure d'aluminium (AlN) obtenu par dépôt chimique en phase vapeur.

Comme indiqué plus haut, de la mullite peut être formée à l'interface entre le SiC et la couche Al₂O₃ par combinaison entre Al₂O₃ et du SiO₂ produit par oxydation du SiC. De la mullite peut également être formée à l'interface entre la couche Al₂O₃ et la couche externe à base de SiO₂.

La présence d'une interphase mullite d'un côté et/ou de l'autre de la couche Al₂O₃ est avantageuse du fait qu'elle présente un coefficient de dilatation intermédiaire entre celui de Al₂O₃ et celui du SiC ou de la couche vitreuse à base de SiO₂.

Aussi, il pourra être avantageux de former volontairement une interphase mullite entre le SiC et la couche intermédiaire en Al₂O₃ ou précurseur de Al₂0₃ (figure 5) ou entre celle-ci et la couche externe vitreuse à base de SiO₂ (figure 6) ou de chaque côté de la couche intermédiaire (figure 7).

Le dépôt de l'interphase mullite peut être rèalisé par projection au plasma. A titre indicatif, l'épaisseur de l'interphase mullite est d'environ 30 microns.

Ainsi, dans l'application envisagée ci-dessus, la caractéristique essentielle de l'inventionréside dans la formation d'une couche intermédiaire ne contenant pas de silicium et constituée essentiellement d'alumine ou d'un précurseur de l'alumine entre la couche de carbure de silicium et la couche externe vitreuse à base de silice.

La couche intermédiaire constitue une barrière de réaction entre la silice de la couche externe et le carbure de silicium, ainsi qu'un piège pour la silice engendrée par oxydation du carbure de silicium en cas de fissuration donnant accès au carbure de silicium pour des espèces oxydantes du milieu environnant. Ainsi, de façon inattendue, la couche intermédiaire permet de conserver les avantages de la couche externe vitreuse à base de silice dans des conditions d'oxydation active du carbure de silicium, même lorsque des fissures existent.

L'épaisseur de la couche intermédiaire en alumine ou précurseur d'alumine est avantageusement au moins égale à 20 microns.

La couche externe vitreuse à base de silice a une épaisseur au moins égale à 50 microns.

Différents dopants ou charges peuvent être introduits dans la couche externe vitreuse à base de silice afin de modifier les propriétés de celle-ci, comme, par exemple, l'émissivité ou la viscosité à température élevée.

En particulier, la viscosité peut être contrôlée par ajout d'oxydes métalliques afin d'être adaptée aux températures rencontrées par le matériau en service, pour que la couche externe vitreuse remplisse sa fonction de cicatrisation de fissures de façon optimale à ces températures.

Bien que l'on ait envisagé plus haut la protection anti-oxydation d'un matériau composite thermostructural de type C/SiC, l'invention est applicable à d'autres matériaux composites thermostructuraux contenant une phase oxydable. Il s'agit notamment des matériaux composites à matrice mixte par exemple matrice C-SiC (matrice carbone et carbure de silicium) dans lesquels la surface SiC est constituée par la phase externe SiC de la matrice, ou des matériaux à matrice carbone, par exemple C/C, munis d'un revêtement de surface en SiC obtenu par dépôt ou infiltration chimique en phase vapeur ou par pack-cémentation, ou des matériaux céramique/céramique munis d'une interphase pyrocarbone ou nitrure de bore entre les fibres céramiques et la matrice céramique, les matériaux étant à matrice SiC ou étant munis d'un revêtement de surface en SiC.

En outre, l'invention est applicable dans les cas où le carbure de silicium de la matrice ou du revêtement est remplacé par une autre céramique formée par un composé du silicium et sujette à dégradation par oxydation active, en particulier le nitrure de silicium.

Plus généralement, l'invention est utilisable pour la protection anti-oxydation de tous matériaux dont au moins la surface est constituée par une céramique formée par un composé du silicium, plus particulièrement lorsque les matériaux sont susceptibles d'être exposés à des conditions dans lesquelles une oxydation active du composé du silicium pourrait se produire.

## Revendications

1. Procédé pour la protection anti-oxydation d'un matériau dont au moins la surface est constituée d'une céramique formée par un composé du silicium susceptible d'être dégradé par oxydation, ledit procédé comprenant les étapes qui consistent à :
- former une couche intermédiaire ne contenant pas de silicium sur la surface de la céramique formée par un composé du silicium, et
- former sur la couche intermédiaire une couche externe en un oxyde, ladite couche intermédiaire étant en alumine ou en un précurseur d'alumine et constituant une barrière de réaction entre l'oxyde de la couche externe et la céramique formée par un composé du silicium,
caractérisé en ce que l'on forme une couche externe vitreuse à base de silice ayant des propriétés cicatrisantes dans le domaine de l'oxydation passive du composé du silicium, la couche intermédiaire en alumine ou précurseur d'alumine constituant une barrière de réaction vis-à-vis de l'oxydation active du composé du silicium par la silice de la couche externe.

2. Procédé selon la revendication 1, caractérisé en ce qu'une interphase en mullite est formée entre la céramique formée par un composé du silicium et la couche intermédiaire.

3. Procédé selon l'une quelconque des revendications 1 et 2, caractérisé en ce qu'une interphase en mullite est formée entre la couche intermédiaire et la couche externe vitreuse à base de silice.

4. Matériau protégé contre l'oxydation comprenant une couche en céramique formée par un composé du silicium susceptible d'être dégradé par oxydation, ledit matériau étant muni d'une couche intermédiaire ne contenant pas de silicium sur la surface de la céramique formée par un composé du silicium, et d'une couche externe en un oxyde sur la couche intermédiaire, la couche intermédiaire étant en alumine ou en un précurseur de l'alumine et constituant une barrière de réaction entre l'oxyde de la couche externe et la céramique formée par un composé du silicium,
caractérisé en ce que la couche externe est une couche vitreuse à base de silice ayant des propriétés cicatrisantes dans le domaine de l'oxydation passive du composé du silicium, tandis que la couche intermédiaire en alumine ou précurseur d'alumine constitue une barrière de réaction vis-à-vis de l'oxydation active du composé du silicium par la silice de la couche externe.

5. Matériau selon la revendication 4, caractérisé en ce que le précurseur de l'alumine est un composé de l'aluminium donnant de l'alumine par oxydation.

6. Matériau selon l'une quelconque des revendications 4 et 5, caractérisé en ce qu'il comprend une interphase en mullite entre la couche en composé du silicium et la couche intermédiaire.

7. Matériau selon l'une quelconque des revendications 4 à 6, caractérisé en ce qu'il comprend une interphase en mullite entre la couche intermédiaire et la couche externe vitreuse à base de silice.

8. Matériau selon l'une quelconque des revendications 4 à 7, caractérisé en ce qu'il constitue un matériau composite thermostructural comprenant un renfort fibreux réfractaire densifié par une matrice réfractaire au moins en partie en céramique formée par un composé du silicium, ladite couche en composé du silicium étant constituée par la partie externe de la matrice.

9. Matériau selon l'une quelconque des revendications 4 à 7, caractérisé en ce qu'il constitue un matériau composite thermostructural comprenant un renfort fibreux réfractaire densifié par une matrice réfractaire, ladite couche en composé du silicium étant un revêtement formé sur la matrice.

10. Matériau selon l'une quelconque des revendications 8 et 9, caractérisé en ce que l'un au moins de ses éléments constitutifs que sont le renfort fibreux et la matrice est au moins partiellement en carbone.

11. Matériau selon l'une quelconque des revendications 8 à 10, caractérisé en ce qu'il comprend une interphase oxydable en un matériau choisi parmi le pyrocarbone et le nitrure de bore entre les fibres du renfort fibreux et la matrice.

12. Matériau selon l'une quelconque des revendications 4 à 11, caractérisé en ce que la céramique formée par un composé du silicium est choisie parmi le carbure de silicium et le nitrure de silicium.

## Claims

1. A process for anti-oxidation protection of a material of which at least a surface is composed of a ceramic made from a silicon compound prone to deterioration by oxidation, said process comprising the steps of:
- forming an intermediate layer devoid of silicon over the surface of the ceramic made from a silicon compound, and
- forming an outer layer made of oxide on the intermediate layer, said intermediate layer being made of alumina or an alumina precursor so as to constitute a reaction barrier between the oxide of the outside layer and the ceramic made from a silicon compound,
characterised in that a silica based vitreous outer layer is formed which has healing properties in the field of the passive oxidation of the silicon compound, the intermediate layer made of alumina or an alumina precursor constituting a reaction barrier with respect to the active oxidation of the silicon compound by the silica of the outer layer.

2. The process according to claim 1, characterised in that a mullite interphase is formed between the ceramic made from a silicon compound and the intermediate layer.

3. The process according to claim 1 or 2, characterised in that a mullite interphase is formed between the intermediate layer and the silica based vitreous outer layer.

4. A material protected against oxidation, comprising a ceramic layer made from a silicon compound prone to deterioration by oxidation, said material being provided with an intermediate layer devoid of silicon over the surface of the ceramic made from a silicon compound, and with an outer layer made of oxide on the intermediate layer, the intermediate layer being made of alumina or an alumina precursor, and constituting a reaction barrier between the oxide of the outside layer and the ceramic made from a silicon compound,
characterised in that the outer layer is a silica based vitreous layer having healing properties in the field of the passive oxidation of the silicon compound, whereas the intermediate layer made of alumina or an alumina precursor constitutes a reaction barrier with respect to the active oxidation of the silicon compound by the silica of the outer layer.

5. The material according to claim 4, characterised in that the alumina precursor is an aluminum compound yielding alumina by oxidation.

6. The material according to claim 4 or 5, characterised in that it comprises a mullite interphase between the silicon compound layer and the intermediate layer.

7. The material according to any one of claims 4 to 6, characterised in that it comprises a mullite interphase between the intermediate layer and the silica based vitreous outer layer.

8. The material according to any one of claims 4 to 7, characterised in that it constitutes a thermostructural composite material comprising a refractory fibrous reinforcement densified by a refractory matrix that is at least partially made from a ceramic made of a silicon compound, said silicon compound layer being constituted by the external portion of the matrix.

9. The material according to any one of claims 4 to 7, characterised in that it constitutes a thermostructural composite material comprising a refractory fibrous reinforcement densified by a refractory matrix, said silicon compound layer being a coating formed over said matrix.

10. The material according to claim 8 or 9, characterised in that at least one of its constituent elements among said fibrous reinforcement and said matrix is at least partially made of carbon.

11. The material according to any one of claims 8 to 10, characterised in that it comprises an oxidizable interphase made of a material chosen among pyrolytic carbon and boron nitride between the fibers of the fibrous reinforcement and the matrix.

12. The material according to any one of claims 4 to 11, characterised in that the ceramic made of a silicon compound is chosen among silicon carbide and silicon nitride.

## Patentansprüche

1. Verfahren zum Schützen eines Materials gegen Oxidation, wobei mindestens die Oberfläche des Materials aus einer Keramik besteht, die von einer Siliciumverbindung, die dazu neigt, durch Oxidation abgebaut zu werden, gebildet wird, folgende Schritte aufweisend:
- Ausbilden einer Zwischenschicht, die kein Silicium enthält, auf der Oberfläche der aus einer Siliciumverbindung gebildeten Keramik, und
- Ausbilden einer Außenschicht aus einem Oxid auf der Zwischenschicht, wobei die Zwischenschicht aus Aluminiumoxid oder aus einem Vorläufer von Aluminiumoxid besteht und eine Reaktionssperre zwischen dem Oxid der Außenschicht und der aus einer Siliciumverbindung gebildeten Keramik darstellt,
dadurch gekennzeichnet, daß eine glasige Außenschicht auf der Basis von Siliciumoxid mit selbstheilenden Eigenschaften im Bereich der passiven Oxidation der Siliciumverbindung ausgebildet wird, wobei die Zwischenschicht aus Aluminiumoxid oder einem Vorläufer von Aluminiumoxid eine Reaktionssperre gegen die aktive Oxidation der Siliciumverbindung durch das Siliciumoxid der Außenschicht darstellt.

2. Verfahren nach Anspruch 1, dadurch gekennzeichnet, daß zwischen der aus einer Siliciumverbindung gebildeten Keramik und der Zwischenschicht eine Zwischenphase aus Mullit ausgebildet wird.

3. Verfahren nach Anspruch 1 oder 2, dadurch gekennzeichnet, daß zwischen der Zwischenschicht und der glasigen Außenschicht auf der Basis von Siliciumoxid eine Zwischenphase aus Mullit ausgebildet wird.

4. Oxidationsgeschütztes Material aufweisend eine Keramikschicht, die aus einer Siliciumverbindung, die dazu neigt, durch Oxidation abgebaut zu werden, gebildet ist, wobei das Material an der Oberfläche der aus einer Siliciumverbindung gebildeten Keramik mit einer Zwischenschicht, die kein Silicium enthält, und auf der Zwischenschicht mit einer Außenschicht aus einem Oxid versehen ist, wobei die Zwischenschicht aus Aluminiumoxid oder aus einem Vorläufer von Aluminiumoxid besteht und eine Reaktionssperre zwischen dem Oxid der Außenschicht und der aus einer Siliciumverbindung gebildeten Keramik darstellt,
dadurch gekennzeichnet, daß die Außenschicht eine glasige Schicht auf der Basis von Siliciumoxid mit selbstheilenden Eigenschaften in dem Bereich der passiven Oxidation der Siliciumverbindung ist, während die Zwischenschicht aus Aluminiumoxid oder einem Vorläufer von Aluminiumoxid eine Reaktionssperre gegen die aktive Oxidation der Siliciumverbindung durch das Siliciumoxid der Außenschicht darstellt.

5. Material nach Anspruch 4, dadurch gekennzeichnet, daß der Vorläufer von Aluminiumoxid eine Aluminiumverbindung ist, die durch Oxidation Aluminiumoxid ergibt.

6. Material nach Anspruch 4 oder 5, dadurch gekennzeichnet, daß es zwischen der Schicht aus Siliciumverbindung und der Zwischenschicht eine Zwischenphase aus Mullit aufweist.

7. Material nach einem der Ansprüche 4 bis 6, dadurch gekennzeichnet, daß es zwischen der Zwischenschicht und der glasigen Außenschicht auf der Basis von Siliciumoxid eine Zwischenphase aus Mullit aufweist.

8. Material nach einem der Ansprüche 4 bis 7, dadurch gekennzeichnet, daß es ein bei erhöhter Temperatur tragfähiges Verbundmaterial darstellt, das eine hitzebeständige faserige Verstärkung aufweist, die durch eine hitzebeständige Matrix, die zumindest zum Teil aus Keramik besteht, welche aus einer Siliciumverbindung gebildet ist, verdichtet ist, wobei die Schicht aus Siliciumverbindung durch den Außenteil der Matrix gebildet wird.

9. Material nach einem der Ansprüche 4 bis 7, dadurch gekennzeichnet, daß es ein bei erhöhter Temperatur tragfähiges Verbundmaterial darstellt, das eine hitzebeständige faserige Verstärkung aufweist, die durch eine hitzebeständige Matrix verdichtet ist, wobei die Schicht aus Siliciumverbindung ein auf der Matrix ausgebildeter Belag ist.

10. Material nach Anspruch 8 oder 9, dadurch gekennzeichnet, daß mindestens eines seiner aufbauenden Elemente, wie es die faserige Verstärkung und die Matrix sind, mindestens zum Teil aus Kohlenstoff besteht.

11. Material nach einem der Ansprüche 8 bis 10, dadurch gekennzeichnet, daß es eine oxidierbare Zwischenphase aus einem Material, das aus Pyrokohlenstoff und Bornitrid ausgewählt ist, zwischen den Fasern der faserigen Verstärkung und der Matrix aufweist.

12. Material nach einem der Ansprüche 4 bis 11, dadurch gekennzeichnet, daß die aus einer Siliciumverbindung gebildete Keramik ausgewählt ist aus Siliciumcarbid und Siliciumnitrid.
